# EUROPEAN PATENT APPLICATION

(11) **EP 4 600 602 A1**
(43) Date of publication of application: **13.08.2025**
(21) Application number: 24382119.6
(22) Date of filing: 07.02.2024
(51) Int. Cl.: G01B 9/02

(54) **A DIFFERENTIAL INTERFEROMETER AND A METHOD FOR DETECTING VARIATIONS IN THE HIGGS FIELD**

(71) Applicant: Fonseca Casas, Pau, 08026 Barcelona (ES); Silva de Barcellos, Jorge Luiz, 117556 Moscow (RU); Pi Palomés, Francisco Javier, 08011 Barcelona (ES)
(72) Inventor: Fonseca Casas, Pau, 08026 Barcelona (ES); Silva de Barcellos, Jorge Luiz, 117556 Moscow (RU); Pi Palomés, Francisco Javier, 08011 Barcelona (ES)
(74) Representative: Torner, Juncosa I Associats, SL

(57) **Abstract**

A differential interferometer and a method for detecting variations in the Higgs field are proposed. The interferometer comprises a radiation source, to generate a low-fluctuation wave at a given frequency; a splitter element to divide the generated low-fluctuation wave into two different waves, a first wave and a second wave; a first propagation element to propagate the first wave; a second propagation element to propagate the second wave, the second propagation element comprising at least one first medium and at least one second medium, the first medium being configured to propagate the second wave at a first transmission speed, and the second medium being configured to propagate the second wave at a second, different, transmission speed; and a device to mix the first wave and the second wave to detect changes between them, such that the detected changes can be used to detect variations in the Higgs field.

## Description

### TECHNICAL FIELD

The present invention generally relates to differential interferometers. Specifically, the invention relates to a differential interferometer and to a method for detecting variations in the Higgs field.

### BACKGROUND OF THE INVENTION

Until now, interferometers have based their measurement on the velocity/time data from measuring the movement of a photon through a known medium that changes its orientation over time [1]. This method has proven ineffective, as it has never considered the possibility that the obtained measurements are defined by a calculation projecting the perceived reality. Consequently, corrections, as would be applied in a holographic projection, were overlooked. If this correction is contingent on the direction (environment) and medium, discrepancies in the Higgs field may go undetected.

While some efforts to identify perturbations in the Higgs field have incorporated this correction on extensive scales using large interferometers [2], huge devices are necessary for such detections. Unfortunately, this renders them impractical for identifying local disturbances.

New, more reliable, and less bulky differential interferometers for detecting variations in the Higgs field are therefore needed.

### References:

[1] R. Anderson, H. R. Bilger, and G. E. Stedman, "Sagnac effect: A century of Earth-rotated interferometers," Am J Phys, vol. 62, no. 11, pp. 975-985, 1994, doi: 10.1119/1.17656.
[2] A. S. Chou et al., "First Measurements of High Frequency Cross-Spectra from a Pair of Large Michelson Interferometers," Phys Rev Lett, vol. 117, no. 11, p. 111102, Sep. 2016, doi: 10.1103/PHYSREVLETT.117.111102/FIGURES/3/MEDIUM.

### DESCRIPTION OF THE INVENTION

The object of present invention is thus to provide an interferometer capable of detecting the relationship between two waves, of the same frequency, which propagate in two media (coaxial cables, optical fiber, alteration of space, or any two media with different transmission speed) at different speeds. This allows generating a second differential in the measurement, which is controlled in the equipment (e.g. a multimeter or similar device), allowing to detect changes in the Higgs field.

This object is fulfilled by an interferometer with the characteristics of claim 1 and by a method with the features of claim 11.

To that end, the present invention proposes, according to one aspect, a differential interferometer for detecting variations in the Higgs field. The interferometer comprises a radiation source, to generate a low-fluctuation wave at a given frequency; a splitter element, operatively connected to the radiation source, and configured to divide the generated low-fluctuation wave into two different waves, a first wave and a second wave; a first propagation element, to propagate the first wave; a second propagation element, to propagate the second wave, the second propagation element comprising at least one first medium and at least one second medium, the first medium being configured to propagate the second wave at a first transmission speed, and the second medium being configured to propagate the second wave at a second transmission speed, which is different the first transmission speed; and a device, operatively connected to the first propagation element and to the second propagation element, and configured to mix the first wave and the second wave to detect changes between the first and second waves, such that the detected changes can be used to detect variations in the Higgs field.

Present invention also proposes, according to another aspect, a method for detecting variations in the Higgs field, the method comprising providing a differential interferometer; generating, by a radiation source of the differential interferometer, a low-fluctuation wave at a given frequency; dividing, by a splitter element of the differential interferometer, the generated low-fluctuation wave into two different waves, a first wave and a second wave; propagating the first wave via a first propagation element of the differential interferometer; propagating the second wave via a second propagation element of the differential interferometer, the second propagation element comprising at least one first medium and at least one second medium, the first medium propagating the second wave at a first transmission speed and the second medium propagating the second wave at a second transmission speed, which is different the first transmission speed; mixing, by a device of the differential interferometer, the first wave and the second wave; and detecting variations in the Higgs field using detected changes in the first and second waves.

The detected changes can comprise the phase difference between the first and second waves, the frequency variation between the first and second waves, and/or the time of flight (TOF) between the first and second waves.

In some embodiments, the device can comprise a frequency mixer. The interferometer can also include a low-pass filter operatively connected to the frequency mixer to filter the frequency variation between the first and second waves.

In some embodiments, the device can comprise an integrated circuit including an analog/digital converter configured to measure the phase variation between the first and second waves. The interferometer can also include a phase shift converter placed between the first medium and the second medium.

In some embodiments, the radiation source comprises an oscillator.

In some embodiments, the second propagation element has a length that is at least equal to the wavelength of the given frequency.

In some embodiments, the second propagation element comprises between 8 and 16 first mediums and between 8 and 16 second mediums. In yet some embodiments, the first and second mediums can be configured to form a loop.

In some embodiments, the first transmission speed is 0.6 light speed and the second transmission speed is 0.8 light speed.

The first propagation element and the second propagation element can comprise coaxial cables, optical fibers, or any two media, e.g. a gas, with different transmission speed.

The given frequency can be any frequency in the electromagnetic spectrum, e.g. a VHF wave, UHF wave, gamma wave, radar wave, etc.

### BRIEF DESCRIPTION OF THE DRAWINGS

The previous and other advantages and features will be more fully understood from the following detailed description of embodiments, with reference to the attached figures, which must be considered in an illustrative and non-limiting manner, in which:
Fig. 1 illustrates a differential interferometer for detecting variations in the Higgs field, according to a first embodiment.
Fig. 2 illustrates a second embodiment of the proposed differential interferometer for detecting variations in the Higgs field.
Fig. 3 illustrates a third embodiment of the proposed differential interferometer for detecting variations in the Higgs field.

### DETAILED DESCRIPTION OF THE INVENTION AND OF PREFERRED EMBODIMENTS

Present invention provides a differential interferometer 1 designed for the precise detection of variations in the Higgs field.

The proposed differential interferometer 1 incorporates a radiation source 10, such as an oscillator, engineered to generate a low-fluctuation wave (i.e. a jitter) at a specified frequency. The interferometer is also equipped with a splitter element 20 that divides the generated low-fluctuation wave into two distinct waves: a first wave and a second wave. Further components include a first propagation element 30 responsible for transmitting the first wave, and a second propagation element tailored for the second wave.

Particularly, the second propagation element has a length that is at least equal to the wavelength of the specified frequency and is formed by one or more first mediums 40a and one or more second mediums 40b. The first medium(s) 40a propagate the second wave at a first transmission speed, while the second medium(s) 40b propagate the second wave at a distinctly different transmission speed. For instance, the first transmission speed is 0.6 the light speed and the second transmission speed is 0.8 the light speed. The greater the speed difference between the two mediums, the more sensitive the device becomes. As sensitivity increases with increasing speed difference between propagation media, in other embodiments the transmission speeds do not need to specifically be 0.6 and 0.8.

In addition to these elements, the proposed differential interferometer 1 incorporates a device that mixes the first and second waves. This combination enables the detection (e.g. using a multimeter or similar device) of changes between them, such as variations in phase difference, frequency, Time of Flight (TOF), and more. These detected changes serve as indicators for identifying fluctuations in the Higgs field.

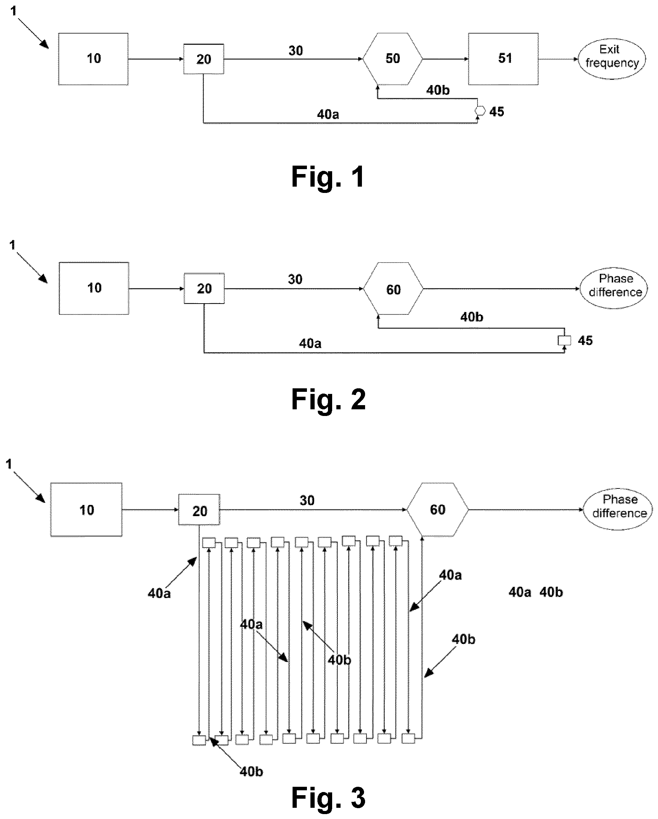

Fig. 1 illustrates an embodiment of the proposed differential interferometer 1 for detecting frequency variations between the first and second waves. In this case, the device comprises a frequency mixer 50. The differential interferometer 1 is further equipped with a low-pass filter 51, to filter the frequency variations. Additionally, the figure shows a component denoted as piece 45, facilitating the connection between the first medium 40a and the second medium 40b. Notably, this embodiment allows for the utilization of higher frequencies, extending up to 5GHz or beyond.

Fig. 2 illustrates a second embodiment of the proposed differential interferometer 1, tailored for detecting phase differences between the first and second waves. In this configuration, the low-pass filter 51 has been replaced with an integrated circuit 60 featuring an analog/digital converter. This integrated circuit 60 can effectively operate up to a frequency of 2.7GHz, meticulously measuring the phase relationship between the incoming waves. The output of the integrated circuit 60 can generate a voltage of 10,000uV per degree, representing the difference between the two incoming waves.

In a specific setup, considering the Higgs field's impact, the maximum displacement is ±0.5 degrees. This translates to approximately ±5,000uV every 24 hours, positioning the differential interferometer 1 in the inertial reference of the Earth. The minute-by-minute readings capture variations in the Higgs field, leveraging the Earth's rotation as the system generating the scanning time base. With the 20-bit A/D conversion conducting multiple conversions per second, the readings for the one-minute period are aggregated, and the arithmetic mean is extracted-the result analyzed minute by minute.

In this second embodiment, the frequency used was 250Mhz.

Although not explicitly depicted, this second embodiment of the differential interferometer 1 is equipped with a phase shift converter (e.g., a six-and-a-half-digit HP multimeter) located between the first and second mediums 40a, 40b. Additionally, Fig. 2 illustrates the inclusion of the piece 45, facilitating the connection between the first medium 40a and the second medium 40b.

Fig. 3 illustrates a third embodiment of the proposed differential interferometer 1. In this case, unlike the previous cases, the second propagation element comprises a plurality of first mediums 40a and second mediums 40b. In some embodiments, the second propagation elements comprises ten first mediums 40a and ten second mediums 40b. Variations in the number of first and second mediums are contemplated; for instance, the count could be four, six, eight, etc. first mediums 40a and an equivalent number of second mediums 40b. Alternatively, the count might surpass ten, for example, reaching twelve, thirteen, or more first mediums 40a and the corresponding second mediums 40b.

In some embodiments, the first and second mediums 40a, 40b can be intricately folded several times for optimal performance. For instance, each first and second medium 40a, 40b can have a 1 meter length, among others.

Despite not being depicted, it's important to highlight that this third embodiment, employing numerous first mediums 40a and second mediums 40b, whether folded or not, is equally applicable for detecting frequency variations between the first and second waves or the TOF.

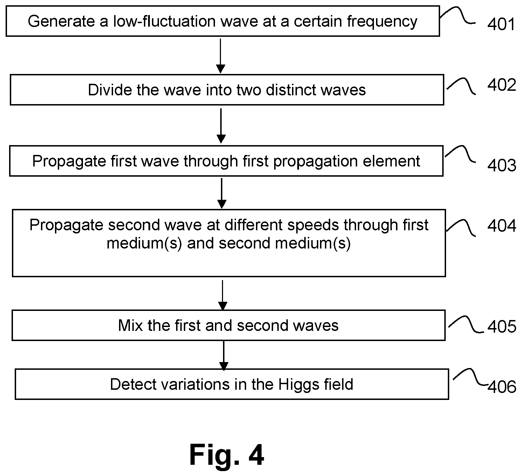

With regard to Fig. 4, an embodiment of a method for detecting variations in the Higgs field using the aforementioned differential interferometer 1 is presented. In step 401, the radiation source 10 produces a low-fluctuation wave at a given frequency (e.g., a 50 fs jitter wave with a frequency ranging from 250 MHz to 1500 MHz). Subsequently, in step 402, the splitter element 20 divides the generated wave into two different waves. The first propagation element 30 carries the first wave (step 403), while the second wave (steps 404 and 405) propagates at different speeds through the first medium(s) 40a and the second medium(s) 40b. In step 406, the first and second waves are combined, facilitating the observation of changes between them, which can be indicative of fluctuations in the Higgs field.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

The scope of the present invention is defined in the following set of claims.

## Claims

1. A differential interferometer for detecting variations in the Higgs field, comprising:
a radiation source (10), configured to generate a low-fluctuation wave at a given frequency;
a splitter element (20), operatively connected to the radiation source (10), and configured to divide the generated low-fluctuation wave into two different waves, a first wave and a second wave;
a first propagation element (30), configured to propagate the first wave;
a second propagation element, configured to propagate the second wave, the second propagation element comprising at least one first medium (40a) and at least one second medium (40b), the first medium (40a) being configured to propagate the second wave at a first transmission speed, and the second medium (40b) being configured to propagate the second wave at a second transmission speed, which is different the first transmission speed; and
a device, operatively connected to the first propagation element (30) and to the second propagation element, and configured to mix the first wave and the second wave to detect changes between the first and second waves, such that the detected changes can be used to detect variations in the Higgs field.

2. The interferometer of claim 1, wherein the detected changes comprise at least one of: a phase difference between the first and second waves, a frequency variation between the first and second waves, a time of flight, TOF, between the first and second waves.

3. The interferometer of any one of the previous claims, wherein the device comprises a frequency mixer (50), and wherein the interferometer (1) further comprises a low-pass filter (51) operatively connected to the frequency mixer (50) to filter a frequency variation between the first and second waves.

4. The interferometer of claim 1 or 2, wherein the device comprises an integrated circuit (60) including an analog/digital converter configured to measure a phase variation between the first and second waves, and wherein the interferometer (1) further comprises a phase shift converter disposed between the first medium and the second medium.

5. The interferometer of any one of the previous claims, wherein the radiation source (10) comprises an oscillator.

6. The interferometer of any one of the previous claims, wherein the second propagation element (40) has a length that is at least equal to a wavelength of the given frequency.

7. The interferometer of any one of the previous claims, wherein the second propagation element comprises between 8 and 16 first mediums (40a) and between 8 and 16 second mediums (40b).

8. The interferometer of claim 7, wherein the first and second mediums (40a, 40b) are configured to form a loop.

9. The interferometer of any one of the previous claims, wherein the first transmission speed is 0.6 light speed and the second transmission speed is 0.8 light speed.

10. The interferometer of any one of the previous claims, wherein the first propagation element (30) and the second propagation element comprise coaxial cables, optical fibers, or a gas.

11. A method for detecting variations in the Higgs field, the method comprising:
providing a differential interferometer;
generating, by a radiation source of the differential interferometer, a low-fluctuation wave at a given frequency;
dividing, by a splitter element of the differential interferometer, the generated low-fluctuation wave into two different waves, a first wave and a second wave;
propagating the first wave via a first propagation element of the differential interferometer;
propagating the second wave via a second propagation element of the differential interferometer, the second propagation element comprising at least one first medium and at least one second medium, the first medium propagating the second wave at a first transmission speed and the second medium propagating the second wave at a second transmission speed, which is different the first transmission speed;
mixing, by a device of the differential interferometer, the first wave and the second wave; and
detecting variations in the Higgs field using detected changes in the first and second waves.

12. The method of claim 11, wherein the detected changes comprise at least one of: a phase difference between the first and second waves, a frequency variation between the first and second waves, a time of flight, TOF, between the first and second waves.

13. The method of claim 11 or 12, wherein the first transmission speed is 0.6 light speed and the second transmission speed is 0.8 light speed.

14. The method of any one of the previous claims 11-13, wherein the generated wave comprises a Very High Frequency, VHF, wave; an Ultra High Frequency, UHF, wave; or a gamma wave.
